## Europäisches Patentamt
## European Patent Office
## Office européen des brevets

(11) Publication number: **0 083 489**
**B1**

(12) **EUROPEAN PATENT SPECIFICATION**

(45) Date of publication of patent specification: **19.04.89**

(51) Int. Cl.⁴: **B 01 D 13/00, B 01 D 13/04**

(21) Application number: **82306759.0**

(22) Date of filing: **17.12.82**

(54) **Membrane systems for filtration.**

(30) Priority: **04.01.82 US 336565**

(43) Date of publication of application:
**13.07.83 Bulletin 83/28**

(45) Publication of the grant of the patent:
**19.04.89 Bulletin 89/16**

(84) Designated Contracting States:
**DE FR GB IT SE**

(56) References cited:
**EP-A-0 036 315**
**EP-A-0 037 730**
**DE-A-2 518 614**
**DE-A-2 622 461**
**DE-A-2 704 099**
**US-A-3 707 231**

(73) Proprietor: **BRUNSWICK CORPORATION**
**One Brunswick Plaza**
**Skokie Illinois 60077 (US)**

(72) Inventor: **Wrasidlo, Wolfgang J.**
**1219 Coast Boulevard**
**La Jolla California 92037 (US)**
Inventor: **Mysels, Karol J.**
**8327 Scenic Drive**
**La Jolla California 92037 (US)**

(74) Representative: **Allden, Thomas Stanley et al**
**A.A. THORNTON & CO. Northumberland House**
**303-306 High Holborn**
**London WC1V 7LE (GB)**

Courier Press, Leamington Spa, England.

# EP 0 083 489 B1

**Description**

This invention is concerned with membrane systems useful for filtering fluids and with filtration systems comprising such membrane systems.

Polymeric membranes suitable for use as filters are well known. These membranes may generally be classified according to their retentivity, i.e. the sizes of particles which they retain, or according to their effective pore size, as either ultrafilter membranes, which have the finest pores, or microporous (or microfilter) membranes which have coarser pores. The dividing line between ultrafilter membranes and microfilter membranes is between approximately 0.025 and 0.050 micrometers in pore size or smallest retained particle.

Membranes may also be classified according to the porosity difference or similarity of their two faces. Thus, membranes may be classified as symmetrical, when the two faces have similar porosity or as asymmetrical when the two faces differ in porosity.

An important characteristic of a membrane is its permeability to water which is measured by the volume of pure water which passes through a unit area of membrane per unit time. Water permeability is customarily expressed in units of cm/min-psi (6.9 kPa) which represents the macroscopic velocity in cm/min at which water flows through the membrane when the driving pressure is one psi (6.9 kPa).

The flow of water through the membrane is, within wide limits, directly proportional to the applied pressure. In general, the permeability to water decreases as the retentivity of the membrane to solids increases, because smaller pores offer more resistance to flow. This relationship, however, is not a simple one since the retentivity depends on the single smallest pore encountered by the liquid in passing through the membrane, whereas the resistance to flow depends on the cumulative effect of all the pores through which this liquid must pass. Hence, membranes of similar solute retention having uniform pores throughout their entire thickness have lower permeabilities than those whose retentivity is due to a thin skin having the same pore size combined with a body or substrate of much larger pores. In other words symmetrical membranes offer more resistance to fluid flow and therefore have slower flow rates compared to asymmetrical membranes of similar retentivity.

In addition to their retention characteristics, membranes may be characterized by their ability to resist, plugging or their dirt-holding capacity. Plugging refers to a reduction of the filtration rate during the filtering operation as a function of the amount of liquid passing the membrane. In order to extend the lifetime of a membrane in a given filtration operation, it is customary to prefilter the fluid through a membrane or filter having higher flow rates and lesser retentivities, but still the ability to reduce severe fouling or blocking of the final membrane filter.

Structurally, membranes vary greatly and may generally be classified as either reticulated or granular. In the former, there is a three-dimensional open network of interconnecting fibrous strands and open interstitial flow channels. In the granular type structure, however, incompletely coalesced solid particles called granules leave an interconnected network of pores between them. Reticulated membrane structures generally have a higher porosity than granular membrane structures. (Porosity of membranes is defined as (1 − the relative density). Porosity is also defined as the ratio of the weight of a given volume of membrane to that of the bulk polymer forming the membrane.)

Polymeric membranes are generally made by preparing a solution of the polymer in a suitable solvent, forming the solution into a thin sheet, a hollow tube or hollow fiber, and then precipitating the polymer under controlled conditions. Precipitation may be carried out by solvent evaporation or by contacting the polymer solution with a nonsolvent.

U.S. Patent No. 3,615,024 discloses a method of forming porous polymeric membranes which are described as being highly asymmetric. The membranes produced according to that method are only slightly asymmetric, however, and have a permeability to water which is only slightly higher than that of symmetrical membranes of the same retentivity.

Membranes may also be classified as composite, supported or integral. Composite membranes comprise a very thin retentive layer attached to a preformed porous support. In a supported membrane, the actual membrane is attached to a strong sheet material of negligible retentivity. Integral type membranes are formed in one and the same operation having layers of the same composition. These layers may have very different properties, depending, in general, on whether the membrane is symmetrical or asymmetric.

Present membrane processing techniques are such that it is virtually impossible to ensure totally defect free membranes. Large defects or holes are, of course, visible to the naked eye and a membrane may be rejected on that basis, alone. Smaller defects or holes of less than 100 microns cannot be readily observed visually. Furthermore, particle passage through a membrane may take place if the pore size distribution of the membrane is large such that particles may pass through the largest size pores. The term "defect" as used in this specification is meant to include not only true defects or holes which inadvertently occur in the membrane during processing and use, but also the largest pores of a membrane which naturally result from a large pore size distribution in the membrane. Furthermore, "defect" is a relative term in the sense that the definition depends upon the application for which the membrane is to be used. For example, in applications involving bacteria retention, a one micron hole would be considered a defect so that most microporous membranes would be considered defective. For other applications, holes as large as 100 microns would not be considered defects.

2

In certain applications, it is extremely important that no particle larger than that which the membrane is specified to retain pass through the membrane with the filtrate which is passing through. These applications include the use of sterilizing solutions where the presence of bacteria could have undesirable effects.

In other applications it is necessary to obtain a very pure filtrate while also ensuring that the particles which are being removed from the fluid are substantially completely recovered.

Symmetrical membranes have until recently been much more generally used than asymmetric membranes and, with symmetrical membranes, the prior art has attempted to solve the problems caused by membrane defects and to meet the requirements indicated above by increasing the thickness of the membrane. This solution is not, however, completely satisfactory.

Improved asymmetric membranes and processes for their preparation are described in EP—A—0 036 315 and EP—A—0 037 730. While these membranes have certain extremely advantageous characteristics and would generally be sufficient to retain all particles for which the membrane is designed, in certain cases there may be need for additional precautions to ensure that no particle passes through the membrane due to a defect or "hole" in the membrane.

We have now surprisingly found that the consequences of defects in polymeric membranes can be substantially or completely obviated by using two asymmetric membranes, each having a skin side and an opposite side, which are arranged face-to-face, that is with their skin sides in intimate contact.

According to the present invention, there is provided a membrane system useful for filtering a fluid which contains particles to be removed from the fluid, the membrane system comprising two porous asymmetric membranes which each comprise a skin side and an opposite side and which are arranged such that the skin side of one membrane is in intimate contact with the skin side of the other membrane.

The present invention also comprises a filtration system which comprises a membrane system according to the invention which is supported in the filtration system so that the whole of the fluid flow passes through the two membranes.

The essence of the present invention is that, unlike the prior art method of attempting to reduce the probability of particle passage through defects by increasing membrane thickness, the problem is solved by statistically reducing the possibility of defect communication between the two membranes. Whether the defects are true defects in the sense of a hole accidentally put into the membrane during production or use or simply the largest pores in a membrane having a large pore distribution, the present invention overcomes the problem of having particles pass through such a defect by statistically blocking the defects in a first membrane with the second membrane, and by statistically blocking the defects in the second membrane with the first membrane.

The "fluid to be filtered may be either a liquid or a gas and the "particle" to be removed may be any substance that one desires to remove from the fluid either because the substance is a contaminant of the fluid or because the substance is valuable and it is economically desirable to recover it.

An asymmetric membrane comprises a skin or shiny side and a dull or support side. By definition of asymmetry, the pores on the opposite faces of an asymmetric membrane differ in size. The skin or shiny side contains the smaller pores while the support or dull side, which is opposite the skin side, contains the larger pores. The size of the particle which is retained is larger than the largest pore in the skin in the absence of a membrane defect.

The asymmetry of the porous membranes used in the present invention may be measured by the ratio of the average pore diameter of its two faces. The asymmetry factor (defined as the ratio of the average pore diameter of the pores of the dull side to the average pore diameter of the pores of the shiny side) for the membranes used in this invention is from 10 to 20,000. For microporous membranes, the asymmetry factor is generally 10 to 300, typically from 50 to 150, and preferably from 75 to 125. While the invention is particularly advantageous when two microporous membranes are used, for example, to remove bacteria from a liquid, it also includes the use of two ultrafiltration membranes for use, for example, in removing viruses from a fluid.

The polymers which may be used to produce the membranes useful in the present invention include broadly any polymer generally used to produce membranes and particularly those described in EP—A—0 036 315 and EP—A—0 037 730 referred to above. Polymers which have been found to be particularly valuable in preparing membranes useful in the instant invention include polysulfones, polyamides, polyimides, polyarylamides, polyvinylidene halides including polyvinylidene fluoride, polycarbonates, polyacrylonitriles including polyalkylacrylonitriles, polystyrene, and polyarylhydrazides. Mixtures of two or more polymers may also be used to make these membranes.

Preferred polymers within the above-noted groups for use in making these membranes include Lexan polycarbonate, Union Carbide P—3500 polyarylsulfone, Nomex polyamide, polyhexamethylene terepthalamide, and polyvinylidene fluoride.

A particularly preferred polymer for use in making these membranes is Union Carbide P—3500 polyarylsulfone. When this particular polymer is employed, it has been found that an average molecular weight of 30,000 is needed in order to obtain a coherent membrane with a reticulated structure. The upper limit of molecular weight is approximately one million. The use of polyarylsulfone with molecular weights in excess of one million is undesirable because of the formation of polymer gels due to chain entanglement. The preferred molecular weight range of the other polymers that may be useful in the present invention depends, of course, upon the particular polymer in question.

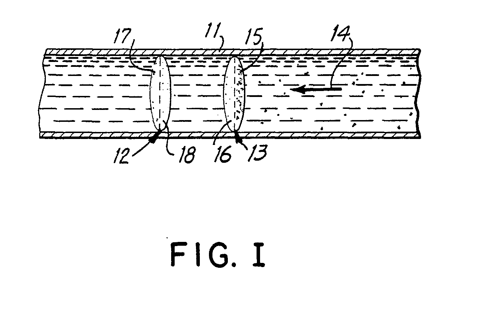

In order that the invention may be more fully understood, a preferred embodiment of filtration system according to the invention will now be described, by way of example, with reference to Figure I of the accompanying drawing which is a diagrammatic axial section through the filtration system.

Figure I shows fluid 14 to be filtered flowing in a tube 11 and passing through porous asymmetric membranes 12 and 13 which have shiny or skin sides 16 and 18 and support or dull sides 15 and 17. For the purpose of understanding the invention, the two membranes 12 and 13 are shown as being separated and with their skin sides not in intimate contact; this is not in accordance with the invention which requires that the two skins be in intimate contact.

Fluid 14 passes from right to left in the drawing passing first through membrane 13 and then through membrane 12. Support side 15 of membrane 13 acts as a built-in prefilter, greatly increasing the dirt-holding capacity of the membrane system. The fluid encounters the largest pores first and later encounters pores having gradually decreasing size with the smallest pores, those in skin 16, being encountered last. Hence larger particles are retained at various levels leaving many more pores available for flow than if they were all retained on one plane at the skin. If the membrane were not highly asymmetric, this advantage would not exist since approximatley the same amount of retained matter would foul both sides of the membrane because the pore sizes on both sides would be approximately the same.

When the membrane 13 is placed with its skin side 16 next to and in intimate contact with the skin side 18 of membrane 12, there results an additional safety precaution against the passage through the membrane system of an undesired particle. When membranes are used with large membrane areas, such as in cartridge filters, the ability to detect bubbles passing through individual large pores becomes less as the flow these pores produce becomes swamped by diffusive flow. Thus, the bubble point integrity test (described below) becomes meaningless.

By using the membranes, the probability of a defect in the first membrane communicating with a defect in the second is reduced to a very low level. In the unlikely event that a defect occurs in each of the membranes, the chances of having two such defects within 50 microns of each other when the two membranes are arranged in accordance with the present invention is about one in a million. Even if such relatively close proximity should occur, the chances of a particle being able to pass from the first defect to the second are minimal. Between defects, there exists a tremendous number of intervening pores in the second membrane which intercept the flow of liquid coming from the first defect and therefore also stop any particles carried by it. Furthermore the intimate contact of the two smooth surfaces substantially or completely prevents any lateral flow of fluid which, in turn, decreases the chance of two defects cooperating to provide the passage of undesirable particles.

The present invention is further illustrated by the following example; all parts and percentage are weight unless otherwise specified.

## Example

A mixture of 73.4 parts dimethylformamide and 15.6 parts tertiary amyl alcohol is formed. To this mixture is slowly added 11 parts of granulated Union Carbide P—3500 polyarylsulfone which has been previously air dried and stored in a vacuum until used. After addition of the polysulfone, the mixture is vigorously stirred for a minimum of eight hours in the absence of moisture.

This mixture is then placed in a dispensing tank at 112°F (44°C) and agitated in a partial vacuum sufficiently to eliminate air bubbles but not so great as to cause non-solvent loss. The turbidity is then adjusted by adding either solvent or nonsolvent as required to obtain an optical density of 0.70 ± 0.03 at 420 nanometers with a 2 centimeter light path, in order to form a casting dope.

This casting dope is transferred into a casting trough (which is heated to a temperature of 112°F (44°)) through a 10 micrometers rated filter. The dope is cast onto a siliconized paper and quenched in a water bath which is pre-heated to 100°F (38°C).

The membrane is rinsed in deionized water which contains a surfactant. It is then dried at 250°F (121°C). It has a mean pore diameter of 0.1 micrometers, a bubble point in water, using nitrogen gas, of 55 psi (379 kPa), and a water permeability of 3 cm/min-psi (6.9 kpa).

This membrane is then formed into two 90 mm diameter discs. These discs are randomly perforated with a needle to give ten to twenty micron holes. About fifty holes are made in each disc. The various membrane systems set forth in Table I below are tested for "bubble point".

The so-called "bubble point" test is an integrity test for a membrane. It is used to determine the largest pore size in the membrane. The bubble point test involves passing a gas, such as air, through a wetted membrane and determing the pore size as a function of the pressure needed to push a bubble through the pore of the membrane. The bubble points of various membrane systems using the membrane prepared, in this example are set forth in Table I below:

TABLE I

| Membrane System | Bubble Point, psi (kPa) |
|---|---|
| Single layer before perforation | 55 (379) |
| Single layer after perforation | 0 |
| Double layer: skin to skin | 70 (482) |
| Double layer: skin to dull | 3—5 (21—34) |
| Double layer: dull to dull | 3—5 (21—34) |

As may be seen, the double layer, skin to skin, membrane system has a substantially higher bubble point, and thus substantially greater integrity, than either of the other double membrane combinations or single membrane which is perforated. The double layer, skin to skin, membrane system with perforated membranes even has a higher bubble point than the single layer, unperforated, membrane system.

The double layer, skin to skin, membrane system retains bacteria *Pseudomonas diminutia* completely at a challenge of $10^{10}$ per $cm^2$ of membrane surface.

Three of the membrane systems of Table I are placed into cartridges and tested for reduction of bacteria *Pseudonmonas diminutia* as set forth in Table II:

TABLE II

| Membrane System | Bubble Point, psi (kPa) |
|---|---|
| Single layer before perforation | $10^5$—$10^7$ |
| Double layer: skin to skin | $10^{10}$ |
| Double layer: skin to dull | $10^5$—$10^8$ |

In the double layer, skin to skin, membrane system, complete retention of the bacteria *Pseudomonas diminutia* is observed even when the second membrane has a bubble point of only 35 psi (241 kPa), but complete retention is not observed when the bubble point of the second membrane is only 25 psi (172 kPa).

The membrane systems of the present invention may be placed within filtration systems which include spiral wound and pleated cartridges, single and multiple disc systems, and tubular configurations.

## Claims

1. A membrane system useful for filtering a fluid which contains particles to be removed from the fluid, the membrane system comprising two porous asymmetric membranes which comprise a skin side and an opposite side and which are arranged such that the skin side of one membrane is in intimate contact with the skin side of the other membrane.

2. A membrane system according to claim 1, in which the skin of each of the membranes has substantially the same pore size.

3. A membrane system according to claim 1 or 2, in which the membrane is a microporous membrane.

4. A membrane system according to any of claims 1 to 3, in which each of the membranes is made of polysulfone or aromatic polyamide.

5. A filtration system which comprises a membrane system according to any of claims 1 to 4, the membrane system being supported in the filtration system so that the whole of the fluid flow passes through the two membranes.

## Patentansprüche

1. Membransystem, das zum Filtern einer Flüssigkeit bzw. eines Fluids, die bzw. das aus der Flüssigkeit bzw. dem Fluid zu entfernende Teilchen enthält, geeignet ist, wobei das Membransystem zwei poröse asymmetrische Membranen umfassen, die eine Hautseite und eine gegenüberliegende Seite umfassen und so angeordnet sind, daß die Hautseite der einen Membran in innigem Kontakt mit der Hautseite der anderen Membran ist.

2. Membransystem nach Anspruch 1, worin die Haut jeder Membran im wesentlichen die gleiche Porengrößebesitzt.

3. Membransystem nach Anspruch 1 oder 2, worin die Membran eine mikroporöse Membran ist.

4. Membransystem nach einem der Ansprüche 1 bis 3, worin jede Membran aus Polysulfon oder aromatischem Polyamid hergestellt ist.

5. Filtrationssystem, das ein Membransystem nach einem der Ansprüche 1 bis 4 umfaßt, wobei das Membransystem in dem Filtrationssystem so gehalten wird, daß der ganze Flüssigkeits-bzw. Fluidfluß durch die zwei Membranen passiert.

**Revendications**

1. Un système de membranes utile pour la filtration d'un fluide qui contient des particules à séparer du fluide, le système de membrane comprenant deux membranes asymétriques poreuses qui comprennent un côté peau et un côté opposé et qui sont disposées de façon que le côté peau de l'une des membranes soit en contact intime avec le côté peau de l'autre membrane.

2. Un système de membranes selon la revendication 1, selon lequel la peau de chacune des membranes a substantiellement la même taille de pores.

3. Un système de membranes selon la revendication 1 ou 2, selon lequel la membrane est une membrane microporeuse.

4. Un système de membranes selon l'une des revendications 1 à 3, selon lequel chacune des membranes est réalisée en polysulfone ou en polyamide aromatique.

5. Un système de filtration qui comprend un système de membranes selon l'une quelconque des revendications 1 à 4, le système de membranes étant supporté dans le système de filtration de façon que la totalité du courant de fluide traverse les deux membranes.

FIG. I